# EUROPEAN PATENT APPLICATION

(11) **EP 1 288 593 A2**
(43) Date of publication of application: **05.03.2003**
(21) Application number: 02292144.9
(22) Date of filing: 30.08.2002
(51) Int. Cl.: F25B 13/00, F25B 27/00, F25B 30/06, F01N 5/02, F01N 3/36, F02G 5/04

(54) **Gas heat pump type air conditioning device**

(30) Priority: 31.08.2001 JP 2001264910
(71) Applicant: Mitsubishi Heavy Industries, Ltd., Tokyo 100-8315 (JP)
(72) Inventor: The designation of the inventor has not yet been filed
(74) Representative: Intès, Didier Gérard André

(57) **Abstract**

In order to provide a gas heat pump type air conditioning device in which accessibility and maintenance operation are not disturbed due to snow in snowy areas, a gas heat pump type air conditioning device comprises a compression device (11) for which the driving source is a gas engine and forms a refrigerating cycle by circulating a refrigerant, a bypass pipe channel section (80) which is provided around space where an outdoor unit is installed and is separated from an engine-coolant-water system (30) of the gas engine via a channel change switching device (81), wherein waste heat exhausted from the gas engine is collected back into the engine-coolant-water, and the refrigerant is heated by the engine-coolant-water so as to enhance air heating capacity.

## Description

### BACKGROUND OF THE INVENTION

### Field of the Invention

This invention relates to a gas heat pump type air conditioning device in which a compression device for circulating a refrigerant is driven by a gas engine as a driving source, and the invention particularly relates to a gas heat pump type air conditioning device which does not obstruct maintenance of the outdoor unit due to snow.

### Description of Related Art

An air conditioning device which performs air conditioning such as air cooling and air heating by using a heat pump is provided with a refrigerant circuit including components such as an indoor heat exchanger, a compression device, an outdoor heat exchanger, and a throttling structure. Air cooling and heating indoors is realized by exchanging heat of indoor air and outdoor air by the indoor heat exchanger and the outdoor heat exchanger during the circulation of a refrigerant. Also, in this refrigerant circuit, the receipt of heat during air heating does not rely on only the outdoor heat exchanger, and a refrigerant heating device may sometimes be provided for directly heating the refrigerant.

Recently, regarding a driving source for the compression device which is provided in the above refrigerant circuit, a driving source employing a gas engine has been developed to replace electric motors which are commonly used. This air conditioning device employing a gas engine is generally called a gas heat pump type air conditioning device (hereinafter called a GHP). By this GHP, because municipal gas or the like which are relatively inexpensive, can be used as fuel, running costs do not increase because it is different from an electric heat pump provided with compression device using electric motors (hereinafter called EHP); therefore cost can be reduced for consumers.

Also, in a GHP, outstanding air heating effects can be achieved if so-called waste heat such as high temperature exhaust gas exhausted from a gas engine or heat of engine-coolant-water is used as a heat source for the refrigerant during air heating operations, and more efficient use of energy is possible as compared with an EHP (electric heat pump). In addition, in this case, the efficiency percentage of energy use of the GHP is 1.2 to 1.5 times higher compared to an EHP. Also, the apparatuses above, such as a refrigerant heating device, are not necessarily to be installed in the refrigerant circuit if this kind of structure is used.

Additionally, in a GHP, defrosting operations necessary for the outdoor heat exchanging device in air heating can be performed by using the exhaust heat of the gas engine. Generally, the defrosting operation in an EHP is done in such a way that the air heating operation stops and the air cooling operation is temporarily performed to defrost the outdoor heat exchanging device. In this case, because cold air flows into the room, comfortableness inside the room is deteriorated. In contrast, in a GHP, continuous air heating operation is possible because of the above condition, and problems occuring in the case of an EHP do not arise.

As mentioned above, in a GHP, the exhaust heat such as high temperature exhaust gas exhausted from gas engines or waste heat of engine-coolant-water is introduced to a heat exchanging device such as an exhausted gas heat exchanging device or water heat exchanging device during air heating operation; thus, collecting exhaust heat is possible by using such exhaust heat as a heat source for the refrigerant, outstanding air heating capacity can be obtained differently from EHP.

According to this, GHP is attention because the GHP is provided with sufficient air heating capacity even in snowy areas where outdoor air temperature is low in winter.

However, in the conventional GHP, because it is common for an outdoor unit to be installed outside of the room, there is a problem in snowy areas in that the snow around the outdoor unit hinders access to it for the purpose of maintenance.

Also, an outdoor unit is installed on a foundation made of concrete with anchor bolts; however, if the height of the foundation is determined so that the door for maintenance can be opened with a certain amount of snow there, the height of the foundation may be higher as compared with the case of areas without much snow, thus that is a problems such as increase in cost.

### SUMMARY OF THE INVENTION

This invention was made in consideration of the above conditions. Thus, an object of this invention is to provide a gas heat pump type air conditioning device so that accessibility and operations for maintenance will not be disturbed due to snow in snowy areas.

In order to solve the above problems, the invention has the following construction.

In a gas heat pump type air conditioning device according to the first aspect of this invention, a refrigerating cycle is formed by circulating the refrigerant by a compression device for which the driving source is a gas engine, waste heat exhausted from the gas engine is collected in engine-coolant-water, and the refrigerant is heated by the engine-coolant-water in order to enhance the heating capacity, a bypass pipe channel section is branched from an engine coolant water system of the gas engine by way of a channel change switching device, and the bypass pipe channel section is embedded in proximity to where an outdoor unit is installed.

In the gas heat pump type air conditioning device according to the first aspect of present invention, a bypass pipe channel section which is branched from an engine coolant water system of the gas engine by way of a channel change switching device is provided, and the bypass pipe channel section is embedded in proximity to where an outdoor unit is installed; thus if engine coolant water is introduced to the bypass pipe channel section according to necessity, it is possible to heat the space around the outdoor unit to melt snow.

In such a gas heat pump type air conditioning device, the bypass pipe channel section should preferably be branched after the refrigerant is cooled by the engine coolant water. By doing this, waste heat of engine coolant water can be used effectively after excellent air heating capacity is obtained by heating the refrigerant.

In the gas heat pump type air conditioning device according to the first or the second aspect of the present invention, a heating device which heats exhaust gas which is exhausted from the gas engine and increases the amount of thermal energy collectable in an exhaust gas heat exchanging device should preferably be provided. By doing this, it is possible to enhance air heating capacity and to enhance the snow melting capacity by waste heat.

As a heating device in this case, a combusting device for heating exhaust gas which supplies the combustion gas generated by combusting fuel by the combustor to the combustion gas is preferable. This combustor of a combusting device for heating exhaust gas may be provided in the combustion gas heat exchanging device, or it is also possible that the catalyst container which contains exhaust gas cleaning catalyst is provided in the fuel system which connects the gas engine and the exhaust gas heat exchanging device so that the combustor should be provided inside this catalyst container.

In the gas heat pump type air conditioning device according to the first and the second aspect of the present invention, it is preferable that the bypass channel which is provided with the channel change switching device in the engine coolant water system in the downstream of the gas engine is formed, and the heating device for engine coolant water is provided in the bypass channel. By doing this, it is possible to enhance air heating capacity and snow melting capacity by waste heat.

The heating device should combust and heat the same gas fuel as the case of the gas engine, and more preferably the gas fuel is municipal gas.

Also, the heating device should preferably operate when an outdoor air temperature detecting device detects a temperature lower than a predetermined value.

A gas heat pump type air conditioning device has the following effects.

According to the first aspect of present invention, a bypass pipe channel section which isbranched from an engine coolant water system of the gas engine by way of a channel change switching device is provided, the bypass pipe channel section is embedded in proximity to where an outdoor unit is installed, and thus if the engine coolant water is introduced into the bypass pipe channel section according to necessity, it is possible to heat the peripheral area where the outdoor unit is provided to melt snow. Because of this, it is easy to secure the accessibility to the outdoor unit and the space for maintenance when it snows.

By providing the heating device for heating the exhaust gas during low outdoor air temperature and the heating device for heating the engine coolant water, it is possible to increase air heating capacity and the capacity for melting snow by using waste heat.

### BRIEF DESCRIPTION OF THE DRAWINGS

FIG. 1 shows the first embodiment of gas heat pump type air conditioning device during air heating operation according to the present invention.
FIG. 2 shows the first embodiment of gas heat pump type air conditioning device during air cooling operation according to the present invention.
FIG. 3A and 3B show an example of disposition of the group of bypass pipe channel around the outdoor unit in front view and in plan view.
FIG. 4 shows the second embodiment of gas heat pump type air conditioning device during air heating operation according to the present invention.
FIG. 5 shows an important part of the first example of the second embodiment of the combusting device for heating exhaust gas in the present invention.
FIG. 6 shows an important part of the second example of the second embodiment of the combusting device for heating exhaust gas in the present invention.
FIG. 7 shows an important part of the third example of the second embodiment of the combusting device for heating exhaust gas in the present invention.
FIG. 8 shows the third embodiment of a gas heat pump type air conditioning device during air heating operation according to the present invention.
FIG. 9 is an enlarged view of the heating device of the third embodiment.

### DETAILED DESCRIPTION OF THE INVENTION

An embodiment of a gas heat pump type air conditioning device (hereinafter called a GHP) according to present invention is explained with reference to drawings as follows.

### First Embodiment

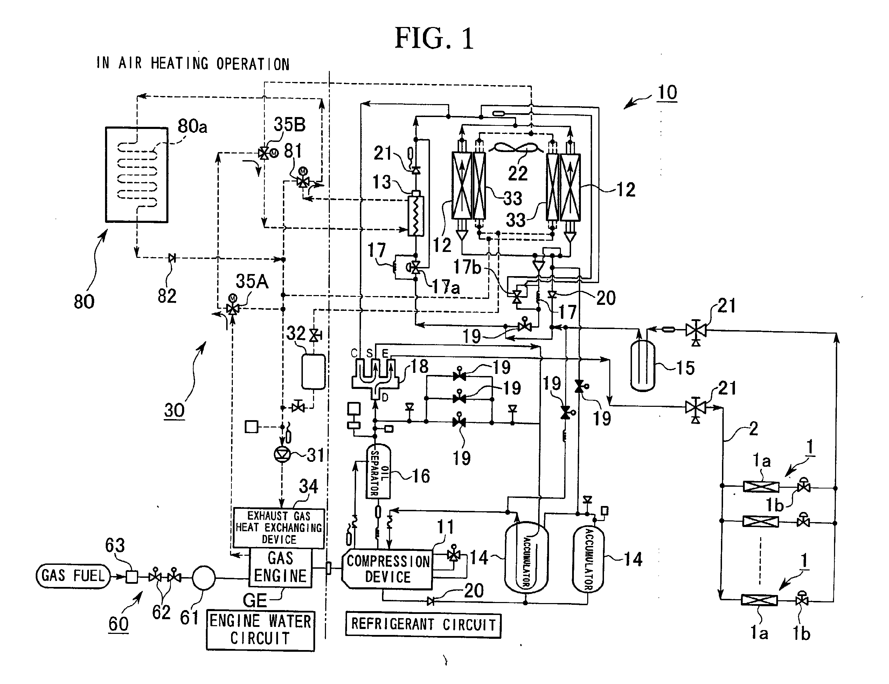

FIG. 1 is a system diagram showing an overall construction of an air heating system of a GHP as a first embodiment of the present invention. This drawing generally shows an indoor unit 1 and an outdoor unit 10 provided with device such as a compression device for driving the gas engine. In addition, one or a plurality of indoor unit 1 and outdoor unit 10 are connected by refrigerant pipe 2 in such a way that the refrigerant can circulate.

The indoor unit 1 is provided with an indoor heat exchanging device 1a which functions as an evaporator which evaporates the low temperature low pressure liquid refrigerant so as to remove heat from indoor air (indoor atmosphere) during air cooling operation and functions as a condenser which condenses the high temperature high pressure gas refrigerant so as to heat the indoor air during air heating operation. In addition, throttling structure 1b is provided per indoor heat exchanging device 1a.

The outdoor unit 10 is internally divided into two major sections.

The first major section is a section forming a refrigerant circuit primarily by equipment such as a compression device and outdoor heat exchanging device together with the indoor unit 1, and the first major constructing section is called hereinafter the "refrigerant circuit section".

The second major section is a section provided with equipment such as a gas engine for driving the compression device together with auxiliary equipment, and the second major section is called hereinafter the "gas engine section".

In the refrigerant circuit section, equipment such as compression device 11, outdoor heat exchanging device 12, water heat exchanging device 13, accumulator 14, receiver 15, oil separator 16, throttling construction 17, 4-way valve 18, solenoid valve 19, check valve 20, and control valve 21 are provided.

A compression device 11 is operated by a gas engine GE as a driving source (which is to be described later), and the compression device 11 compresses the low temperature low pressure gas refrigerant taken from any one of indoor heat exchanging device 1a or outdoor heat exchanging device 12 and discharges as high temperature high pressure gas refrigerant. By this construction, the refrigerant can radiate the heat to the outdoor air through the outdoor heat exchanging device 12 during air cooling operation even if the outdoor air temperature is high. Also, the refrigerant can give heat to indoor air through the indoor heat exchanging device 12 during air heating operation.

The outdoor heat exchanging device 12 functions as a condenser which condenses the high temperature high pressure gas refrigerant and radiates heat to the outdoor air during the air cooling operation, and in contrast, the outdoor heat exchanging device 12 functions as an evaporator which evaporates the low temperature low pressure liquid refrigerant and removes heat from outdoor air temperature during the air heating operation. That is, the outdoor heat exchanging device 12 performs a reverse operation to the above indoor heat exchanging device 1a during air cooling operation and air heating operation.

Also, the outdoor heat exchanging device 12 is provided neighboring radiator 33 of the gas engine GE (which is described later). The radiator 33 is a heat exchanging device which refrigerates the engine-coolant-water of the gas engine GE by exchanging heat with outdoor air.

Accordingly, in the case of an air heating operation, when the outdoor air temperature is low, for example, the indoor heat exchanging device 12 which functions as an evaporator can exchange heat between the outdoor air which passed the radiator 33 and was heated by selectively changing the rotating direction of the outdoor unit fan 22, and the evaporating capacity can be enhanced.

The water heat exchanging device 13 provided in order that the refrigerant can collect heat from the engine-coolant-water of the gas engine GE (which is mentioned later). That is, in the air heating operation, the refrigerant does not rely only on the exchange of heat in the indoor heat exchanging device 12, and it becomes possible to collect waste heat from the engine-coolant-water of the gas engine GE; thus, the effect of air heating operation can be enhanced.

Accumulator 14 is provided in order to store the liquid contained in the gas refrigerant flowing into the compression device 11.

Receiver 15 is provided in order to separate the refrigerant liquefied by the heat exchanging device which functions as a condenser into air and liquid, and to store the surplus refrigerant as liquid in the refrigerating cycle.

Oil separator 16 is provided in order to separate the oil content contained in the refrigerant and to return the refrigerant back to the compression device 11.

Throttling construction 17 is provided in order to reduce the pressure of condensed high temperature high pressure liquid refrigerant and to expand the liquid refrigerant so as to produce low temperature low pressure liquid refrigerant. In an example in the drawing, a constant pressure expansion valve, thermostatic expansion valve, and capillary tube are selectively used as a throttling construction 17 according to the purpose.

4-way valve 18 is provided on the refrigerant pipe 2 in order to selectively change the channel of refrigerant and the direction of flow. On this 4-way valve 18, four ports such as D, C, S and E are provided. Port D is connected to the discharging side of the compression device 11 by the refrigerant pipe 2. Port C is connected to the outdoor heat exchanging device 12 by the refrigerant pipe 2. Port S is connected to the absorbing side of the compression device 11 by the refrigerant pipe 2. Port E is connected to the indoor heat exchanging device 1a by the refrigerant pipe 2.

On the other hand, in the gas engine section, a coolant water system 30, a fuel absorbing system 60, exhaust gas system, and an engine oil system (which are not shown in the drawing) are provided where the gas engine GE is provided in the center thereof.

The gas engine GE is connected to a compression device 11 which is provided in the refrigerant circuit by a shaft, a belt and the like; thus, the driving force is conducted from the gas engine GE to the compression device 11.

The coolant water system 30 is provided with a water pump 31, reservoir tank 32, a radiator 33 and the like. This coolant water system 30 chills the gas engine GE by the engine-coolant-water which circulates in the circuit shown by a dashed line organized by connecting these elements by pipes. A water pump 31 is provided for circulating the coolant water of the gas engine GE in the circuit. A reservoir tank 32 is provided for storing the surplus of the coolant water flowing in this circuit temporarily, and for supplying the surplus to the circuit in case the coolant water is in short supply. A radiator 33 is constructed integrally with an outdoor heat exchanging device 12. The radiator 33 is provided for radiating the heat which the engine-coolant-water removes from the gas engine GE to outdoor air.

In the coolant water system 30, in addition to the above elements, an exhaust gas heat exchanging device 34 is provided. This exhaust gas heat exchanging device 34 is provided for collecting the heat of exhaust gas exhausted from the gas engine GE to the engine-coolant-water. Also, in the coolant water system 30, a water heat exchanging device 13 (which was mentioned hereinbefore) is disposed in such a way that the coolant water system 30 spans two systems such as the refrigerant circuit section and the coolant water system 30. Therefore the total construction of the coolant water system 30 is such that the engine-coolant-water not only removes heat from the gas engine GE but also collects heat from exhaust gas during air heating operation; thus, the collected heat is given to the refrigerant from the engine-coolant-water through the water heat exchanging device 13.

Additionally, flow control of engine-coolant-water in the coolant water system 30 is performed by flow control valves 35A and 35B provided in two places.

A fuel absorbing system 60 is provided with a gas regulator 61, a gas solenoid valve 62, a gas connection port 63 and the like. This fuel absorbing system 60 is a system for supplying the municipal gas such as liquefied natural gas (LNG) as gas fuel to the gas engine GE. A gas regulator 61 is provided for adjusting the delivery pressure of gas fuel which is supplied externally via a gas solenoid valve 62 and a gas connection port 63. The gas fuel for which the pressure is adjusted by this gas regulator 61 is supplied to a combustion chamber of the gas engine GE after being mixed with the air absorbed from the absorbing port (not shown in the drawing).

In the GHP of the present invention, the bypass pipe channel section 80 which is branched from the engine coolant water system 30 of the gas engine GE is provided. This bypass pipe channel section 80 is embedded around the space where the outdoor unit 1 is installed after branching from the coolant water system 30 by way of the flow control valve 81 (a channel change switching device), and the bypass pipe channel section 80 joins the coolant water system 30 again.

The point of the separation of the bypass pipe channel section 80 is in the downstream of the water heat exchanging device 13 so that the engine coolant water (warm water) after the refrigerant is heated is introduced therein. This is for the purpose of reusing the thermal energy retained by the engine coolant water after the refrigerant is heated, and in addition, the purpose is to secure the amount of heat for heating the refrigerant in the water heat exchanging device 13. The junction where the bypass pipe channel section 80 returns to the coolant water system 30 may be in appropriate points on the pipe channel between the flow control valve 81 and the water pump 31, and the check valve 82 should preferably be provided to prevent the back flow.

The flow control valve 81 may be preferable if it can adjust the incoming flow to the bypass pipe channel section 80 and the incoming flow directly to the water pump 31 based on the divergence of the valve. Also the pipe channel should preferably be changed simply and selectively by a three way valve or a combination of a plurality of switch valves, or the like.

Additionally, the flow control valve 81 may be preferably operated after receiving the control signal outputted from a manual switch (not shown in the drawing) or sensors for detecting snow and temperature.

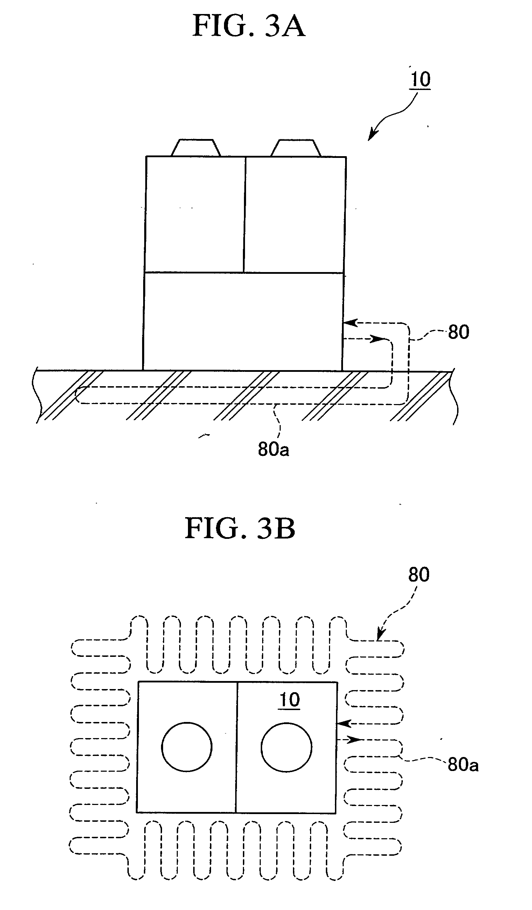

The bypass pipe channel section 80 is embedded as a group of pipes 80a which are disposed around the rack of the outdoor unit 10 (for example a foundation made of reinforced concrete) or underground by appropriate density after the bypass pipe channel 80 emerges from the outdoor unit 10 as shown in FIG. 3A and 3B. Although the area for embedding this bypass pipe channel section 80 should preferably be as large as possible, there are limits such as amount of heat of engine coolant water which can be used. Therefore the area for embedding this bypass pipe channel section 80 can be preferably and selectively determined by factors such as accessibility to the outdoor unit 10, space for maintenance, space for installing each device, the construction of outdoor unit 10, and amount of heat which can be used.

In the example shown in the drawings, although the bypass pipe channel section 80 is one system, it is possible to branch the bypass pipe channel section 80 into an appropriate plurality of sections by making headers, or it is also possible to provide switch valves according to necessity to enable the respective flow. Furthermore, the disposition of the group of pipes 80a is not limited to the case as shown in the drawings; thus, the most preferable disposition may be selectively determined in consideration of factors such as temperature and pressure loss.

In the following paragraphs, regarding the GHP, a typical way of performing the method of air cooling and air heating for the indoor environment is explained by describing the flow of the refrigerant and the engine-coolant-water.

First, the operating method of the air heating operation is explained with reference to FIG. 1. Regarding the description of the valves, if a valve in the drawing is filled in black, the valve is open. The directions of the flow of the refrigerant and the engine-coolant-water are shown by arrows.

In this case, in a 4-way valve 18 of the refrigerant circuit, the interval between the port D and the port E, and the interval between the port C and the port S are connected. The discharging side of the compression device 11 is connected to the indoor heat exchanging device 1a. In such a condition, high temperature high pressure gas refrigerant discharged from the compression device 11 is sent to the indoor heat exchanging device 1a through the 4-way valve 18 and the operating valve 21.

High temperature high pressure gas refrigerant exchanges heat with the indoor air in the indoor heat exchanging device 1 a to be liquefied. In this process, the gas refrigerant radiates heat to heat the indoor air, and after that, the gas refrigerant becomes high temperature high pressure liquid refrigerant. This liquid refrigerant flows passing through a throttling construction 1b, an operating valve 21 and a receiver 15, and consequently this liquid refrigerant is separated into gas and liquid content.

The liquid refrigerant discharged from the receiver 15 is introduced to the refrigerant pipe 2 which is branched, either portion of which is sent to the water heat exchanging device 13 via the throttling construction 17a of the constant pressure expansion valve. The other liquid refrigerant is sent to the outdoor heat exchanging device 12 through the solenoid valve 18 which is made to open and the throttling construction 17b of the thermal expansion valve.

The pressure of liquid refrigerant sent to the water heat exchanging device 13 is reduced by passing through the throttling construction 17a; thus, the liquid refrigerant becomes low temperature low pressure refrigerant. In the water heat exchanging device 13, low temperature low pressure liquid refrigerant is evaporated by absorbing heat from the engine-coolant-water, thus becoming low temperature low pressure gas refrigerant. At this time, if high temperature engine-coolant-water flows in the radiator 33, the liquid refrigerant can be evaporated efficiently by the engine waste heat.

In addition, regarding the water heat exchanging device 13 and the outdoor heat exchanging device 12 for evaporating the liquid refrigerant, either one can be chosen favorably according to the operating conditions such as outdoor air temperature. Also the combined use is possible according to the construction of the device.

Such a refrigerant which becomes low temperature low pressure gas is introduced to the accumulator 14 from the port C of 4-way valve 18 via the port S, the gas and liquid content of the refrigerant are separated, and are then taken into the compression device 11. The gas refrigerant taken into the compression device 11 is compressed by the operation of the compression device 11 to become high temperature high pressure gas refrigerant, and is sent to the indoor heat exchanging device 1a again; thus, the refrigerating cycle, in which the refrigerant repeatedly changes state, can be formed.

In such air heating operation, in order to prevent the snow from accumulating around the outdoor unit 10, or to melt the snow, the engine coolant water flowing from the water heat exchanging device 13 is supplied to the bypass pipe channel section 80 by operating the flow control valve 81. Although the temperature of this engine coolant water is decreased by heating the refrigerant in the water heat exchanging device 13, this engine coolant water is still warm water retaining substantial amounts of heat. Therefore, preventing the snow from accumulating and melting the snow by heating around the group of pipe 80a by the flow of this warm water through the group of pipes 80a are possible. That is, it is possible to prevent the snow from accumulating around the outdoor unit 10 and melting the snow by collecting waste heat of the gas engine GE from the engine coolant water.

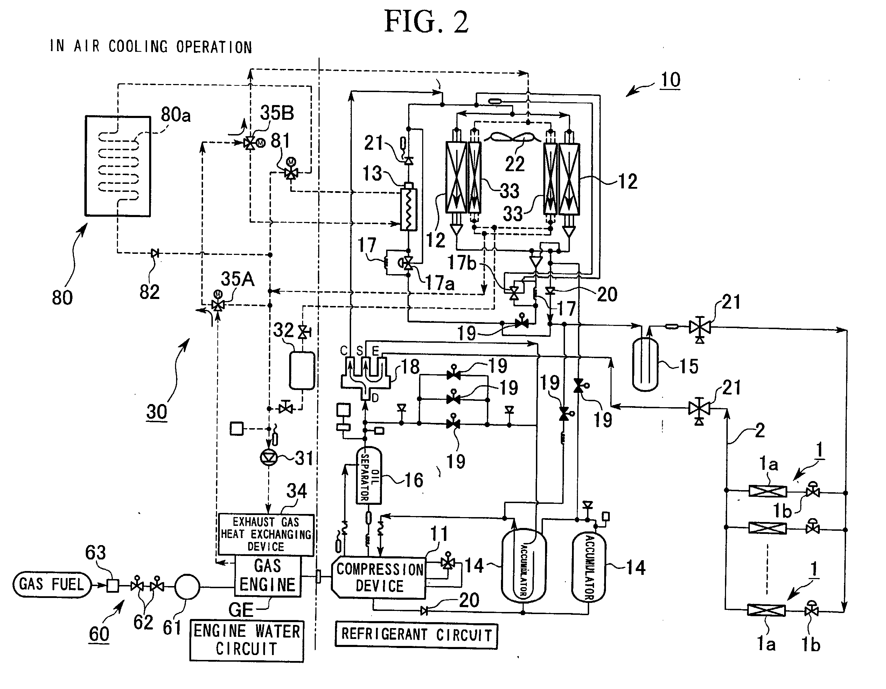

Next, the flow of the refrigerant and the engine-coolant-water in air cooling operation is explained briefly with reference to the FIG. 2.

In this case, in a 4-way valve 18, spaces are connected between the port D and the port C, and between the port E and the port S. The discharging side of the compression device 11 is connected to the outdoor heat exchanging device 12. In this condition, the high temperature high pressure gas refrigerant discharged from the compression device 11 is sent to the indoor heat exchanging device 12 which functions as a condenser through the 4-way valve 18.

The high temperature high pressure gas refrigerant is evaporated in the outdoor heat exchanging device 12 to discharge heat to outdoor air; thus, the refrigerant becomes high temperature high pressure liquid refrigerant. This liquid refrigerant is introduced to the receiver 15 through the check valve 20. The liquid refrigerant separated into air and liquid components in the receiver 15 is introduced to the throttling construction 1b through the operating valve 21; then, the pressure is reduced in the process of passing through the throttling construction 1b, resulting in low temperature low pressure liquid refrigerant, then the liquid refrigerant is sent to the indoor heat exchanging device 1a which functions as an evaporator.

The low temperature low pressure liquid refrigerant sent to the indoor heat exchanging device 1a removes heat from the indoor air and is evaporated. In this process, this refrigerant chills the indoor air and becomes low temperature low pressure gas refrigerant, and is introduced to the 4-way valve 18 through the operating valve 21 and the refrigerant pipe 2.

The low temperature low pressure gas refrigerant introduced to the 4-way valve 18 flows into the accumulator 14 from the port E via the port S. After the liquid content is separated here, the gas refrigerant is absorbed in the compression device 11. The gas refrigerant absorbed by the compression device 11 is compressed by the operation of the compression device, and becomes high temperature high pressure gas refrigerant to be sent to the outdoor heat exchanging device 12; thus, the refrigerating cycle where the refrigerant repeatedly changes state can be formed.

Additionally, in air cooling operations, the supply of engine coolant water to the bypass channel 80 is stopped.

### Second embodiment

In the above-mentioned snowy areas, because outdoor air temperature is generally low, the lack of air heating capacity is of concern. Under such conditions, it is anticipated that the amount of heat which can be used to prevent snow from accumulating and to melt the snow is in short supply.

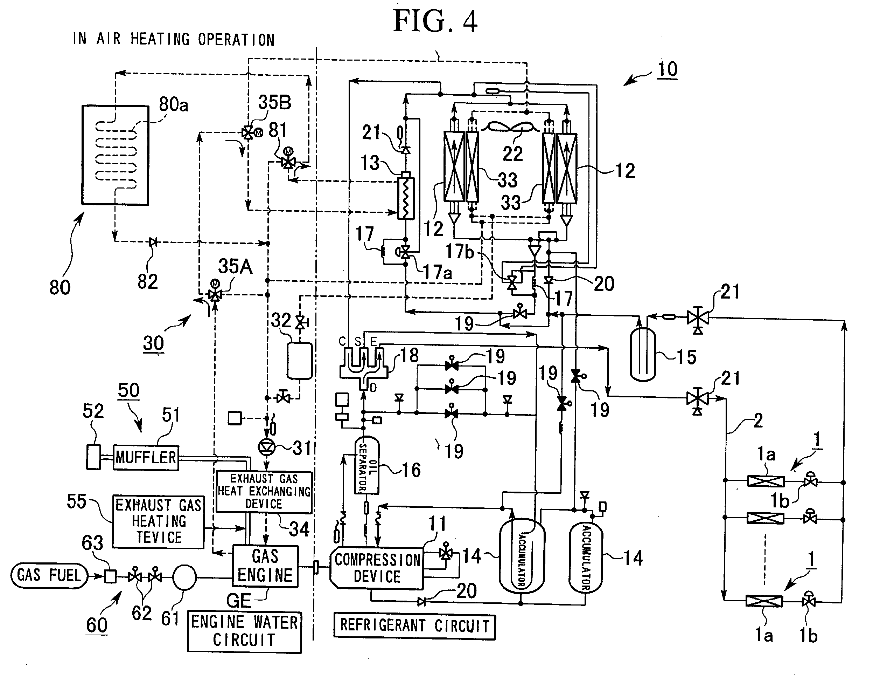

In the GHP of the second embodiment of present invention, as shown in FIG. 4, an exhaust gas heating device 55 which heats exhaust gas which is exhausted from the gas engine GE and increases the amount of thermal energy collectable in an exhaust gas heat exchanging device 34 is provided in the fuel gas system 50 which connects the gas engine GE and the exhaust gas heat exchanging device 34.

The exhaust gas system 50 is a system for releasing the exhaust gas of the gas engine GE to the atmosphere, the exhaust gas system 50 is provided with the muffler 51 and the top of exhaust flue 52. The exhaust gas which is exhausted from the gas engine GE flows through above exhaust gas heat exchanging device 34, heats the engine coolant water, and then, after that, the exhaust gas is released from the top of exhaust flue 52 into the atmosphere.

The amount of thermal energy retained in the exhaust gas heating device 55 increases by further heating high temperature exhaust gas exhausted from the gas engine GE with other sources of heat, or by adding (mixing) high temperature combustion gas retaining large amounts of thermal energy.

The embodiment of the above exhaust gas heating device is explained with reference to the drawings as follows. The drawings which are used in the explanation are show the features in FIG. 4 by enlarging an important part.

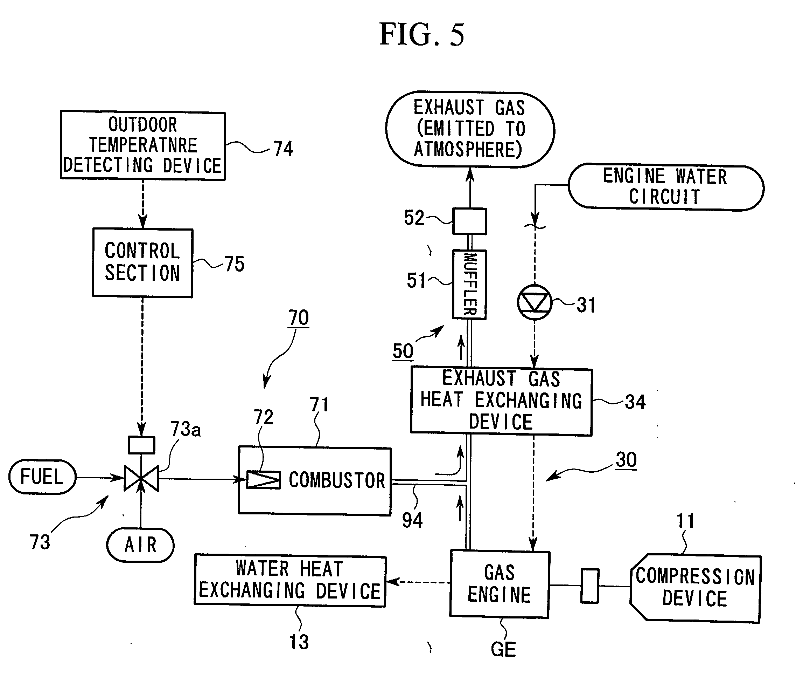

In the first embodiment shown in FIG. 5, the combusting device for heating exhaust gas 70 which heats the exhaust gas exhausted from the gas engine GE and increases the amount of thermal energy which is collectible in the exhaust gas heat exchanging device 34 is provided.

This combustion device for heating exhaust gas 70 comprises a hollow combustor 71, a combustion nozzle 72 provided in the combustor 71, a fuel supplying system 73 which supplies fuel and air to the combustion nozzle by a predetermined mixture ratio, a combustion gas supplying channel 94 which supplies combustion gas generated by combusting the fuel with the combustion nozzle 72, from the combustor 71 to exhaust gas exhausted from the gas engine GE.

That is, in the combustion device for heating exhaust gas 70, combustion gas generated by combusting fuel in the combustor 71 is mixed with the exhaust gas exhausted from the gas engine GE of the gas heat pump type air conditioning device via combustion gas supplying channel 94 so as to be supplied to the exhaust gas system 50.

In the embodiment shown in the drawing, although the combustion gas supplying channel 94 joins to a piping of the exhaust system 50 between the gas engine GE and the exhaust gas heat exchanging device 34, the combustion gas may be supplied directly inside the exhaust gas heat exchanging device 34.

In the fuel supplying system 73, a control valve 73a is provided, an air-fuel mixture in which fuel and air are mixed in appropriate ratio is supplied to the combustion nozzle 72 via this control valve 73a. The control valve 73a opens when a combusting device for heating exhaust gas 70 operates, in other words, when an outdoor air temperature detecting device 45 detects a temperature lower than a predetermined value during air heating operation and a control signal output from the control section 75 is received. As an outdoor air temperature detecting device 45, a temperature sensor which can be provided in an appropriate place near the outdoor unit can be mentioned. Also, other types of outdoor air temperature detecting devices, can be mentioned,. Also, the condition of outdoor air temperature can be determined depending on the condition of the refrigerant such as temperature and pressure detected by various sensors which are provided in the channel for circulating the refrigerant.

When a detecting signal indicating low outdoor temperature is input to the control section 75, the control section 75 opens the control valve 73a to supply fuel and air to the combustion nozzle 72, and the air-fuel mixture is ignited in the combustion nozzle 72.

When air-fuel mixture is combusted, high temperature combustion gas is generated to be supplied to the exhaust system 50, and thus the thermal energy retained in the combustion gas is added to the exhaust gas. Because of this, the amount of heat which can be absorbed in the engine coolant water in the exhaust gas heat exchanging device increases, the engine coolant water is more highly heated and can be supplied to the water heat exchanging device 13. Accordingly, the amount of heat for heating the refrigerant in the water heat exchanging device 13 increases, and it is possible to evaporate low temperature low pressure refrigerant even during low outdoor air temperature and to supply the refrigerant to the refrigerating cycle. Also a greater amount of heat, which can be used to melt snow in the bypass pipe channel 80, is obtained.

The fuel to be used in the above combusting device for heating exhaust gas 70 should preferably be gas fuel such as municipal gas which is used similarly in the gas engine GE. This is because the gas engine GE and the fuel system can be used compatibly, and additionally the cost of the fuel is low.

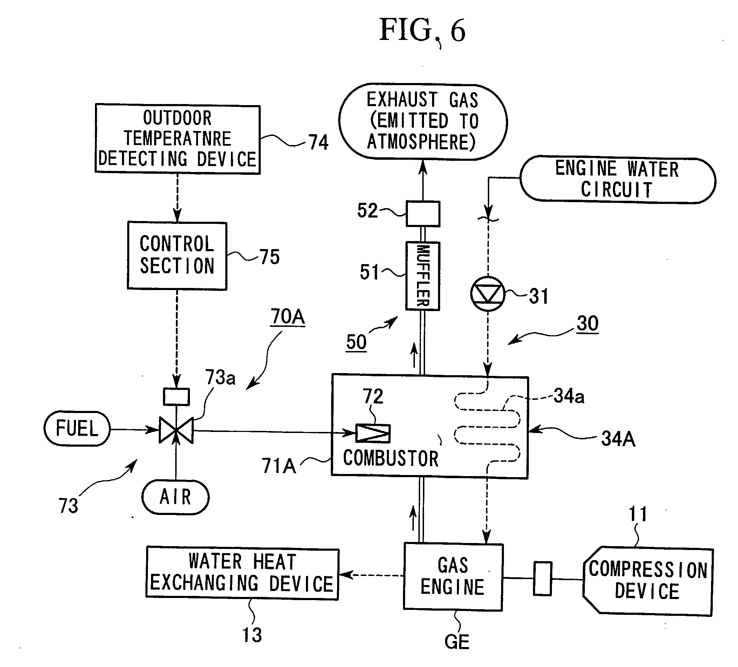

In the second example of the second embodiment as shown in the FIG. 6, the combustion nozzle 72 of the combusting device for heating exhaust gas 70A is provided inside the hollow combustoring device body 71A which can be compatibly the exhaust gas heat exchanging device 34A and the casing. Other factors are similar to the first embodiment as shown in FIG. 5, and the same reference numerals are used and detailed explanation is omitted.

In this combusting device for heating exhaust gas 70A which is constructed in such a way, the amount of heat of the combustion gas generated inside the combusting device body 71A is directly added to the exhaust gas passing through the exhaust gas heat exchanging device 34A by combusting the air-fuel mixture in the combustion nozzle 72. By doing this, the engine coolant water flowing through the group of pipes 34a can be heated highly efficiently with no thermal loss, and also, it can be expected that exhaust gas and engine coolant water are heated by radiating heat of a flame.

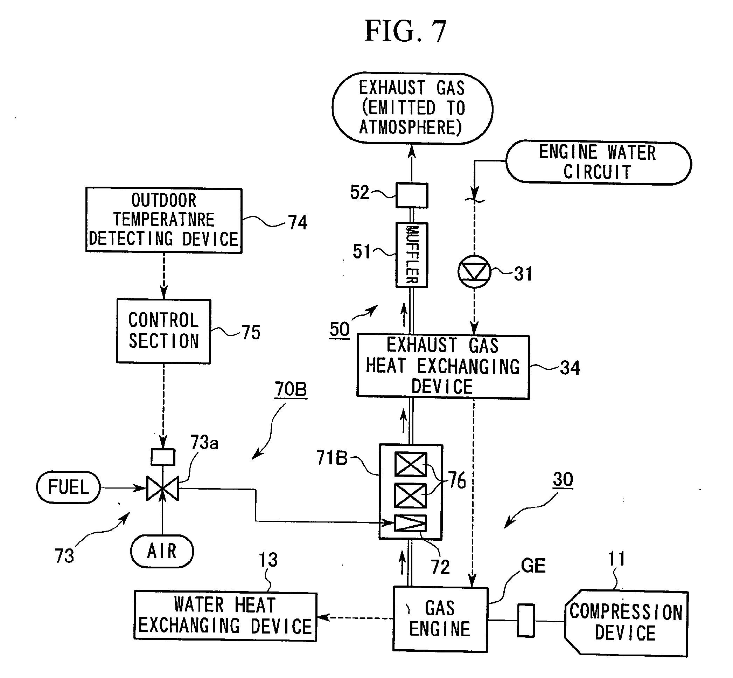

Consequently, in the third example of the second embodiment shown in FIG. 7, the combustion nozzle 72 of the combusting device for heating exhaust gas 70B is provided in hollow combusting device body 71B which is compatible with the catalyst container which contains the exhaust gas cleaning catalyst 76. Other factors are similar to the first embodiment as shown in FIG. 5, and the same reference numerals are used and detailed explanation is omitted.

The combusting device for heating exhaust gas 70B containing the exhaust gas cleaning catalyst 76 is provided in the exhaust system 50 to be located between the gas engine and the exhaust gas heat exchanging device 34. As an exhaust gas cleaning catalyst 76, for example, a rhodium catalytic converter is preferably mentioned. By constructing it in this way, it is possible to increase the heat for heating the engine coolant water at the same time as cleaning the exhaust gas of the gas engine GE and the exhaust gas.

Also, it is known that the cleaning of exhaust gas by the exhaust gas cleaning catalyst 76 can be done more efficiently when the exhaust gas is at a high temperature; therefore, raising the temperature of the exhaust gas by adding combustion gas can also lead to the promotion of cleaning the combustion gas by the catalyst.

As explained above, the exhaust gas heating device 55 which can heat the exhaust gas according to necessity during air heating operation is provided, thus more heat is added to waste heat of the engine, and therefore it is possible to supply more thermal energy to exhaust gas heat exchanging device 34 and the engine coolant water can be heated to higher temperature than conventional energy.

Because of this, even in the cold areas where outdoor air temperature may become quite low and it snows, the refrigerant can be evaporated in the water heat exchanging device 13 by exchanging heat with high temperature engine coolant water retaining large amounts of thermal energy. Also, it is possible to melt snow by using the engine coolant water after the refrigerant is heated by the water heat exchanging device 13. Accordingly, the refrigerating cycle can be maintained by using heat supplied from the waste heat of the engine and the exhaust gas heating device 55 even during low outdoor air temperatures in which sufficient amounts of heat necessary to evaporate the refrigerant in outdoor heat exchanging device 12 cannot be obtained from outdoor air; thus, sufficient air heating operating capacity is obtained, and air heating capacity can be enhanced even during low outdoor air temperature. Also the amount of thermal energy of engine coolant water which can be used to melt snow can be increased.

### Third embodiment

This embodiment is in consideration of usage in snowy areas where the lack of thermal energy which can be used for air heating operation and melting snow due to the low outdoor air temperature is of concern similarly to theabove second embodiment.

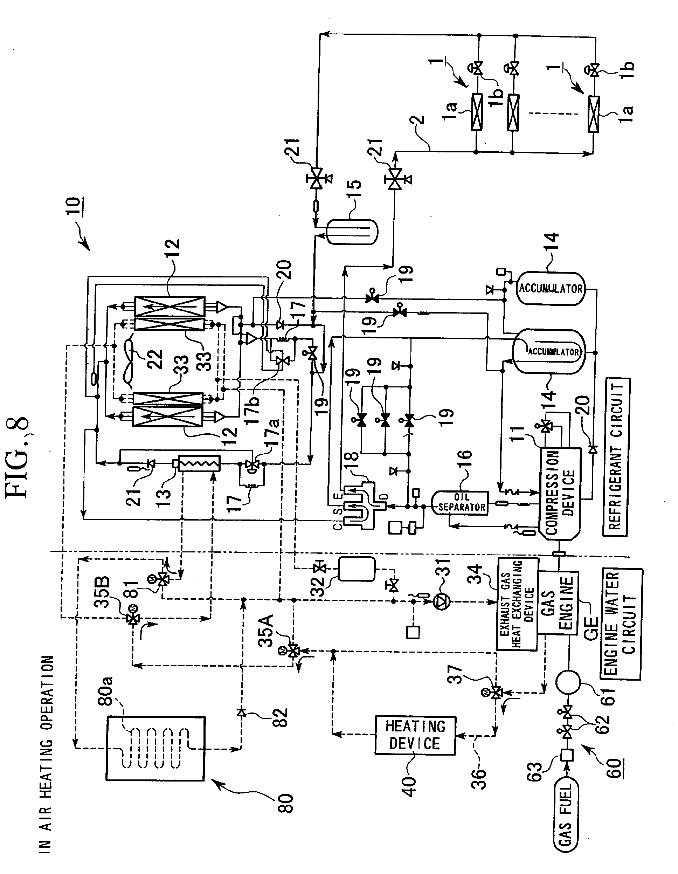

In the GHP of this embodiment shown in FIG. 8, the heating device 40 is provided so as to heat engine coolant water in appropriate points of the engine coolant water system. This heating device 40 is provided in the bypass channel 36 formed by dividing the engine coolant water system after the gas engine GE is cooled. In the branching part of the bypass channel 36, the flow control valve 37 is provided as a channel change switching device. In an example shown in the drawing, the bypass channel 36 joins the upstream of the flow control valve 35A after separated in the downstream of the gas engine GE. The divergence of this flow control valve 37 can be adjusted, and the entire amount can flow to either of channel, or dividing the flow by a certain ratio is also possible according to necessity.

The channel change switching device is not limited to the above flow control valve 37, the three way valve of which divergence (amount of flow) cannot be adjusted can be used, and the combined use of two separate switch valves is also possible.

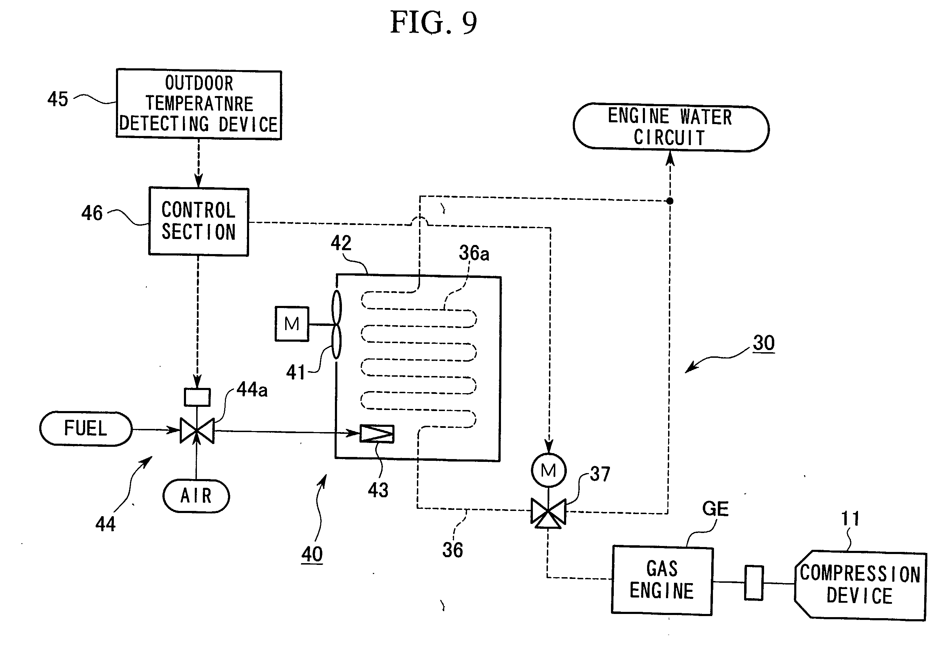

FIG. 9 shows an enlarged peripheral part of above heating device 40. Here, the heating device 40 which is provided in the engine coolant water system of GHP and is an engine coolant water heating device in order to heat the engine coolant water flown after cooling the gas engine GE, comprises a frame body 42 which is provided with a ventilation fan 41, a group of pipes 36a which is provided in the frame body 42 to flow the engine coolant water, a combustor 43 provided in the frame body 42, a fuel supplying system 44 which supplies fuel and air to the combustor 43 at a predetermined ratio, and the engine coolant water flowing through the group of pipes 36a is heated by the combustor 43.

The ventilation fan 41 is provided to ventilate the inside the frame body 42 which contains the group of pipes 36a and the combustor 43. The combustor 43 receives the supplied air-fuel mixture of which the mixture ratio is appropriately predetermined from the fuel supplying system 44, combusts the air-fuel mixture, and generates high temperature combustion gas. This combustion gas is exhausted to the outside of the frame body 42 by the ventilation fan 41 after heating the engine coolant water flowing through the group of pipes 36a. Additionally, the combustor 43 is provided in the frame body 42, thus heating by radiation heat generated by the combustion of the air-fuel mixture can be expected.

As explained above, the heating device 40 can heat the engine coolant water according to necessity when air heating operation is performed, the engine coolant water retaining greater amounts of thermal energy to which greater amounts of heat is added together with waste heat of the engine can be supplied to the water heat exchanging device 13.

By this, even in cold areas where outdoor air temperature is quite low and it snows, by the exchange of heat with high temperature engine coolant water retaining large amounts of thermal energy, the refrigerant can be evaporated in the water heat exchanging device 13, and furthermore, it is possible to melt snow by using the engine coolant water after the refrigerant is heated in the water heat exchanging device 13. Accordingly, even during low outdoor air temperature where sufficient amounts of heat for evaporating the refrigerant in the outdoor heat exchanging device 12 cannot be obtained from outdoor air, it is possible to maintain the refrigerating cycle by using the heat supplied from the waste heat of the engine and the heating device 40; therefore, it is possible to obtain sufficient air heating capacity to enhance the air heating operation capacity during low outdoor air temperature. Also, it is possible to increase the amount of heat of the engine coolant water which can be used to melt snow.

Additionally, the construction of present invention is not limited to the above embodiments, for example, factors such as the number and the variation of the devices used for the refrigerating cycle can be preferably changed within the scope of features of the present invention.

## Claims

1. A gas heat pump type air conditioning device comprising:
a compression device (11) having a gas engine driving source and forming a refrigerating cycle by circulating a refrigerant;
a bypass pipe channel section (80) which is provided around a space where an outdoor unit is installed and is divided from an engine-coolant-water system (30) of the gas engine via a channel change switching device (81);
wherein waste heat exhausted from the gas engine is collected back into the engine-coolant-water, and the refrigerant is heated by the engine-coolant-water so as to enhance air heating capacity.

2. A gas heat pump type air conditioning device according to claim 1, wherein the bypass pipe channel section (80) is divided after the refrigerant is cooled by the engine coolant water.

3. A gas heat pump type air conditioning device according to claim 1, wherein a heating device (70) which heats exhaust gas which is exhausted from the gas engine and increases the amount of thermal energy collectable in an exhaust gas heat exchanging device (34).

4. A gas heat pump type air conditioning device according to claim 3, wherein the heating device is a combusting device for heating exhaust gas (55) which supplies the exhaust gas generated by combusting fuel in the combusting device to the exhaust gas.

5. A gas heat pump type air conditioning device according to claim 4, wherein the combusting device of the combusting device for heating exhaust gas (70) is provided in the exhaust gas heat exchanging device (34).

6. A gas heat pump type air conditioning device according to claim 4, wherein a catalyst container which contains exhaust gas cleaning catalyst (76) is provided in a exhaust system (50) which connects the gas engine and the exhaust gas heat exchanging device (34), and a combustor of combusting device for heating exhaust gas (70) is provided in the catalyst container.

7. A gas heat pump type air conditioning device according to claim 1, wherein the bypass channel (36) which is provided with the channel change switching device (81) in the engine coolant water system (30) in the downstream of the gas engine is formed, and the engine coolant water heating device is provided in the bypass channel.

8. A gas heat pump type air conditioning device according to claim 4, wherein the heating device combusts the same gas fuel as the gas engine and heats the gas fuel.

9. A gas heat pump type air conditioning device according to claim 3, wherein the heating device operates when outdoor air temperature detecting device (74) detects temperature lower than a predetermined value.
